# EUROPEAN PATENT SPECIFICATION

(11) **EP 1 923 302 B1**
(45) Date of publication and mention of the grant of the patent: **23.09.2009**
(21) Application number: 07022010.8
(22) Date of filing: 13.11.2007
(51) Int. Cl.: B62J 99/00

(54) **Sensor device with rotationally moving member**
Sensorvorrichtung mit drehbarem Armglied
Capteur avec bras en rotation possible

(30) Priority: 15.11.2006 JP 2006309358
(43) Date of publication of application: 21.05.2008
(73) Proprietor: CATEYE CO., LTD., Osaka-shi, Osaka 546-0041 (JP)
(72) Inventor: Ueda, Takashi, Osaka-shi Osaka 546-0041 (JP)
(74) Representative: Hofer, Dorothea

(56) References cited:
- EP-A- 1 508 514

## Description

### BACKGROUND OF THE INVENTION

### Field of the Invention

The present invention relates to a sensor device.

### Description of the Background Art

Measuring devices for measuring a running speed or the like of a bicycle have conventionally been known.

For example, JP-2005-067354 A (Patent Document 1) and its family member EP 1 508 514 A1, according to the preamble of claim 1, disclose a measuring device having a measurement body portion arranged at a portion where a rear wheel and a gear crank of a bicycle are positioned, and a display portion arranged at a position in a view of a bicycle rider for displaying predetermined information based on a signal transmitted from the measurement body portion.

The measurement body portion has a first sensor portion for detecting movement of a predetermined part of the gear crank to determine a cadence at which a pedal is moving, a second sensor portion for detecting movement of a predetermined part of the rear wheel to determine a running speed of the bicycle, and a transmitting portion electrically connected to the first and second sensor portions for wirelessly transmitting signals detected by the first and second sensor portions to the display portion.

Further, "Edge 205/305 Owner's Manual (pp. 16-18)", [online], GARMIN Ltd., [searched on November 13, 2006], the Internet <URL: http://www.garmin.com/manuals/967_OwnersManual.pdf> (Non-Patent Document 1) discloses a sensor device including a base member tied up on a frame, a body member fixed on the base member and having a cadence sensor mounted therein, and a rotationally moving member rotatably attached to the body member and having a speed sensor mounted therein.

The measuring device disclosed in Patent Document 1 has a three-piece structure in which the first and second sensor portions and the transmitting portion are formed of separate members. On the other hand, for a sensor device for a bicycle, there has been a demand for reduction of the number of parts and downsizing of a measuring device.

Further, to detect movement of a predetermined part in a bicycle by a sensor portion, the distance between the sensor portion and the part where its movement is to be detected should be set at an appropriate distance according to the performance of the sensor portion. Therefore, when the sensor portion is fixed on a front fork or a chain stay of the bicycle, it is necessary to adjust the distance between the fixed sensor portion and the predetermined part to an appropriate distance. In the sensor device described in Non-Patent Document 1, however, the body member does not move rotationally with respect to the base member, and thus it is impossible to vary the distance between a gear crank and the cadence sensor while the sensor device is being stably fixed on a chain stay having a cross section in various shapes including an ellipse, a rectangle, and the like.

### SUMMARY OF THE INVENTION

One object of the present invention is to provide a sensor device for a bicycle having a reduced number of parts and a smaller size, and capable of varying the distance between a sensor portion and a part where its movement is to be detected.

A sensor device in accordance with the present invention is a sensor device attached to a frame constituting a bicycle, including: a base member to be tied up on the frame; a body member rotatably attached to the base member and having a first sensor portion for detecting movement of a first part in the bicycle; and a rotationally moving member rotatably attached to the body member and having a second sensor portion for detecting movement of a second part in the bicycle. The body member includes a transmitting portion electrically connected to the first and second sensor portions for transmitting signals detected by the first and second sensor portions to an outside of the body member. The body member is movable rotationally with respect to the base member to vary a distance between the first part and the first sensor portion, and the rotationally moving member is movable rotationally with respect to the body member to vary a distance between the second part and the second sensor portion.

According to the above structure, the body member includes the first sensor portion and the transmitting portion. Therefore, in comparison with a case where the first sensor portion and the transmitting portion are formed of separate members, the number of parts for the sensor device can be reduced, and the sensor device can be downsized. Further, since the body member is rotatable with respect to the base member, the distance between the first part and the first sensor portion can be adjusted to an appropriate distance. Furthermore, since the rotationally moving member is rotatable with respect to the body member, the distance between the second part and the second sensor portion can be adjusted to an appropriate distance.

Preferably, in the above sensor device, the rotationally moving member is detachable from the body member.

According to the above structure, when the rotationally moving member is attached to the body member, two types of information can be detected by the first and second sensor portions, and when the rotationally moving member is detached from the body member, only one type of information can be detected by the first sensor portion. Consequently, according to the above structure, when the sensor device is used, the sensor device can be used in one aspect as a device for detecting two types of information, and can be used in another aspect as a device detecting only one type of information. Further, from a viewpoint different from the above, when the sensor device is manufactured, common parts can be used for the device for detecting two types of information and the device detecting only one type of information.

In one aspect, in the above sensor device, the first part includes a wheel of the bicycle, and the first sensor portion is able to detect a running speed of the bicycle based on a number of rotations of the wheel. Preferably, in this case, the second part includes a gear crank of the bicycle, and the second sensor portion is able to detect a cadence at which a pedal is moving based on a number of rotations of the gear crank

In another aspect, in the above sensor device, the first part includes a gear crank of the bicycle, and the first sensor portion is able to detect a cadence at which a pedal is moving based on a number of rotations of the gear crank. Preferably, in this case, the second part includes a wheel of the bicycle, and the second sensor portion is able to detect a running speed of the bicycle based on a number of rotations of the wheel.

In the above sensor device, by way of example, the frame is a chain stay of the bicycle.

According to the present invention, a sensor device for a bicycle can be downsized, and manufacturing cost for the sensor device can also be reduced by reducing the number of parts for the sensor device.

Further, from another viewpoint, according to the present invention, the distance between the sensor portion and the part where its movement is to be detected can be varied and adjusted to an appropriate distance, while the sensor device can be stably fixed on a chain stay having a cross section in various shapes including an ellipse, a rectangle, and the like.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a bicycle to which a sensor device in accordance with one embodiment of the present invention is attached.
Fig. 2 is a front view showing a sensor device in accordance with one embodiment of the present invention.
Fig. 3 is a view of the sensor device shown in Fig. 2 seen from a direction indicated by an arrow III.
Fig. 4 is a view of the sensor device shown in Fig. 2 seen from a direction indicated by an arrow IV.
Fig. 5 is a view of the sensor device shown in Figs. 2 to 4 seen from a direction indicated by an arrow V.
Fig. 6 is a view of the sensor device shown in Figs. 2 to 5 seen from a direction indicated by an arrow VI.
Fig. 7 is a view of the sensor device shown in Figs. 2 to 6 seen from a direction indicated by an arrow VII.
Fig. 8 is a perspective view of the sensor device shown in Figs. 2 to 7.
Fig. 9 is a partial exploded perspective view of the sensor device shown in Figs. 2 to 8.
Fig. 10 is another partial exploded perspective view of the sensor device shown in Figs. 2 to 8.
Fig. 11 is a view showing a state where the sensor device shown in Figs. 2 to 10 is fixed on a chain stay of the bicycle.

### DESCRIPTION OF THE PREFERRED EMBODIMENTS

Hereinafter, embodiments of the present invention will be described. It is to be noted that identical or corresponding parts will be designated by the same reference numerals, and the description thereof may not be repeated.

When a number, amount, or the like is referred to in the embodiments described below, the scope of the present invention is not necessarily limited to the number, amount, or the like referred to, unless otherwise specified. Further, in the embodiments described below, each component is not necessarily essential to the present invention, unless otherwise specified. Furthermore, when there are a plurality of embodiments below, it is intended from the beginning to combine features of the embodiments as appropriate, unless otherwise specified.

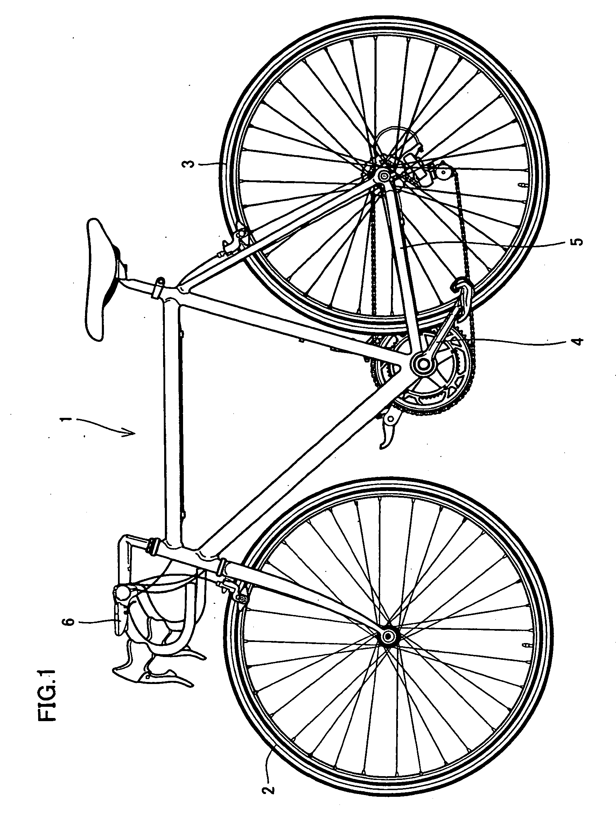

Fig. 1 shows a bicycle to which a sensor device in accordance with one embodiment of the present invention is attached. Referring to Fig. 1, a bicycle 1 includes a front wheel 2, a rear wheel 3, a gear crank 4 rotating with a pedal, a chain stay 5, and a display portion 6 displaying a result detected by a measuring device described below.

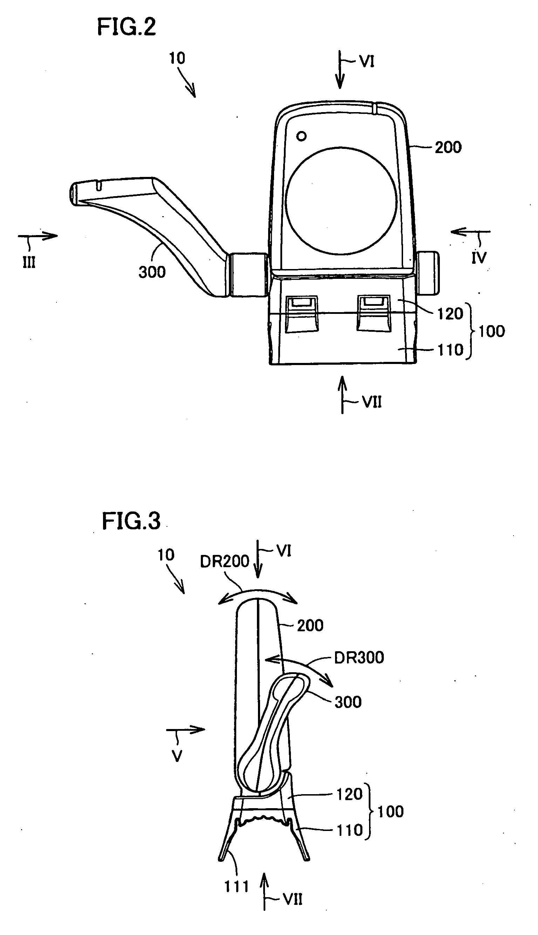

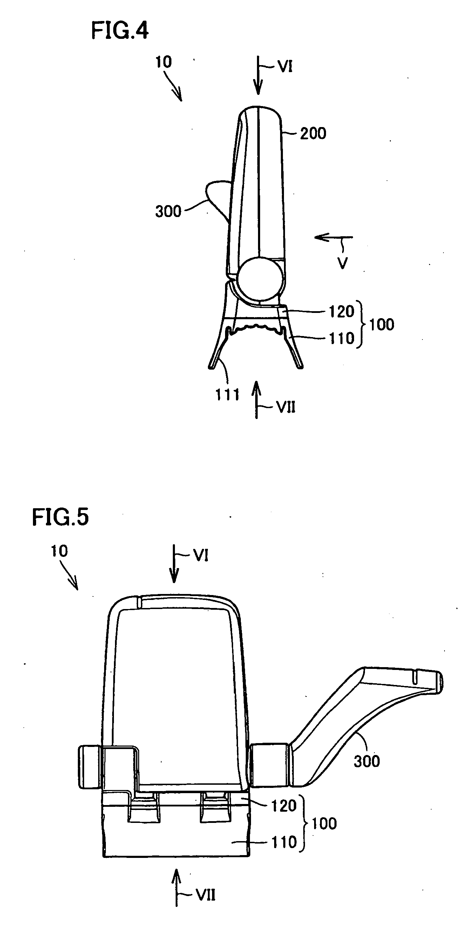

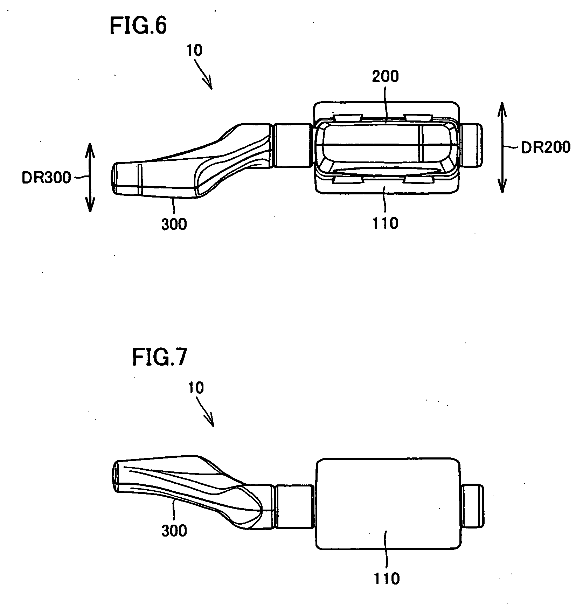

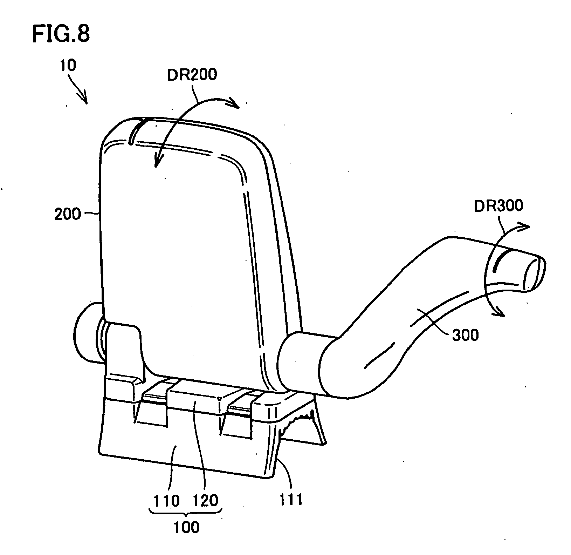

Figs. 2 to 8 are views showing measuring device 10 as the "sensor device" in accordance with the present embodiment. Of them, Figs. 3, 4, 6, and 7 show measuring device 10 seen from directions indicated by arrows III, IV, VI, and VII in Fig. 2, respectively, and Fig. 5 shows measuring device 10 seen from a direction indicated by an arrow V in Figs. 3 and 4. Fig. 8 is a perspective view of measuring device 10.

Referring to Figs. 2 to 8, measuring device 10 in accordance with the present embodiment is a device attached to chain stay 5 of bicycle 1 for detecting a running speed of bicycle 1 based on the number of rotations of rear wheel 3 and detecting a cadence at which a pedal is moving based on the number of rotations of gear crank 4. Measuring device 10 includes a base member 100 tied up on chain stay 5, a speed sensor 200 attached to base member 100, and a cadence sensor 300 attached to speed sensor 200.

Base member 100 has a rubber pad 110 and a body mount 120 attached to rubber pad 110. Further, as shown in Figs. 3 and 4, rubber pad 110 has a concave portion 111. Concave portion 111 receives chain stay 5. Measuring device 10 is fixed on chain stay 5 by fastening base member 100 and chain stay 5 with a band (not shown) with concave portion 111 receiving chain stay 5.

Speed sensor 200 is attached to body mount 120 to move rotatably with respect to body mount 120 in a direction indicated by an arrow DR200. Cadence sensor 300 is attached to speed sensor 200 to move rotatably with respect to speed sensor 200 in a direction indicated by an arrow DR300.

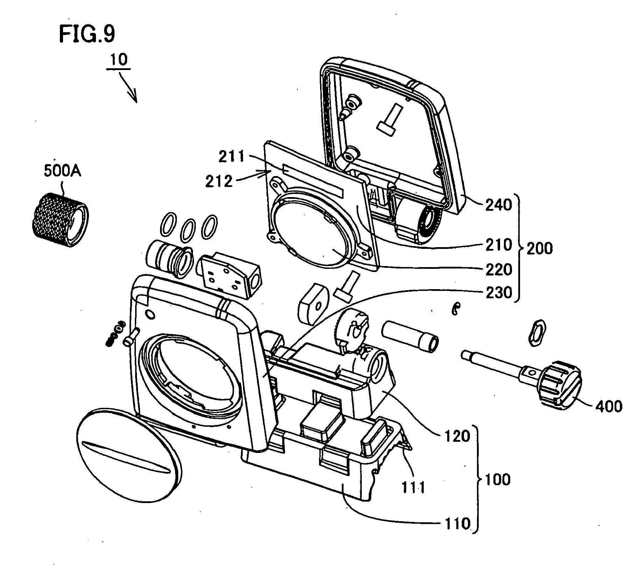

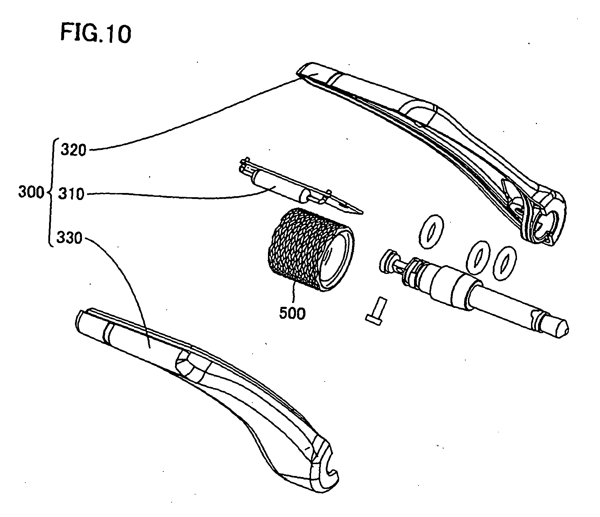

Referring to Figs. 9 and 10 showing partial exploded perspective views of measuring device 10, an internal structure of measuring device 10 will now be described. Referring to Fig. 9, speed sensor 200 as a "body member" includes a printed circuit board 210, a battery 220, and covers 230 and 240. Printed circuit board 210 and battery 220 are accommodated in a space enclosed by covers 230 and 240. A reed switch 211 and a transmission circuit 212 serving as a "transmitting portion" are formed on printed circuit board 210. Reed switch 211 detects passage of a magnet attached to a spoke of rear wheel 3. Thereby, the number of rotations of rear wheel 3 can be detected by speed sensor 200. Transmission circuit 212 is electrically connected to reed switch 211 and a reed switch 310 which will be described later for transmitting results detected by speed sensor 200 and cadence sensor 300 to display portion 6.

As shown in Fig. 10, cadence sensor 300 includes reed switch 310 and covers 320 and 330. Reed switch 310 is accommodated in a space enclosed by covers 320 and 330. Reed switch 310 detects passage of a magnet attached to gear crank 4. Thereby, the number of rotations of gear crank 4 can be detected by cadence sensor 300.

Speed sensor 200 is attached to base member 100 by a screw 400 to be rotatable with respect to body mount 120. Cadence sensor 300 is rotatably and detachably attached to speed sensor 200 by a nut 500. In a case where cadence sensor 300 is detached and only speed sensor 200 is used, a cap 500A is attached instead of nut 500 to make an opening watertight.

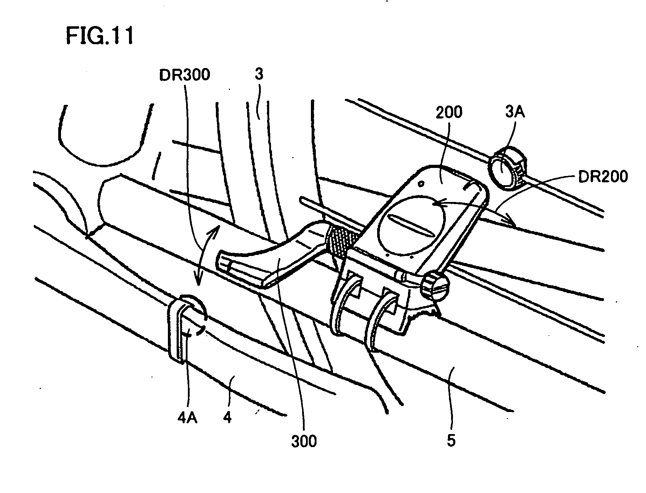

Fig. 11 is a view showing a state where measuring device 10 is fixed on chain stay 5 of bicycle 1. Referring to Fig. 11, a magnet 3A is attached to a spoke of rear wheel 3, and a magnet 4A is attached to gear crank 4. Speed sensor 200 detects passage of magnet 3A, and cadence sensor 300 detects passage of magnet 4A. Thereby, a running speed of bicycle 1 and a cadence at which a pedal is moving are detected.

When measuring device 10 is attached to bicycle 1, speed sensor 200 is moved rotationally in the direction indicated by arrow DR200 and cadence sensor 300 is moved rotationally in the direction indicated by arrow DR300, with rubber pad 110 fixed on chain stay 5. Thereby, an interval between speed sensor 200 and magnet 3A and an interval between cadence sensor 300 and magnet 4A are adjusted. By adjusting the above intervals appropriately, detection of passage of magnet 3A by speed sensor 200 and detection of passage of magnet 4A by cadence sensor 300 can be performed appropriately. An appropriate interval between speed sensor 200 and magnet 3A and between cadence sensor 300 and magnet 4A is, for example, about 3 mm.

In measuring device 10 in accordance with the present embodiment, speed sensor 200 includes reed switch 211 and transmission circuit 212. Therefore, in comparison with a case where reed switch 211 and transmission circuit 212 are formed of separate members, the number of parts for measuring device 10 can be reduced, and measuring device 10 can be downsized.

Further, in measuring device 10, cadence sensor 300 is detachable from speed sensor 200. Therefore, when cadence sensor 300 is attached to speed sensor 200, two types of information (a speed signal and a cadence signal) can be detected by reed switch 211 and reed switch 310, and when cadence sensor 300 is detached from speed sensor 200, only one type of information (a speed signal) can be detected by reed switch 211.

The above description can be summarized as follows. Measuring device 10 in accordance with the present embodiment is a "sensor device" attached to chain stay 5 as a "frame" constituting bicycle 1, and includes: rubber pad 110 as a "base member" tied up on chain stay 5; speed sensor 200 as a "body member" rotatably attached to body mount 120 as the "base member" and having reed switch 211 as a "first sensor portion" detecting movement of rear wheel 3 as a "first part" in bicycle 1; and cadence sensor 300 as a "rotationally moving member" rotatably attached to speed sensor 200 and having reed switch 310 as a "second sensor portion" detecting movement of gear crank 4 as a "second part" in bicycle 1. Speed sensor 200 includes transmission circuit 212 as a "transmitting portion" electrically connected to reed switch 211 and reed switch 310 for transmitting signals detected by reed switch 211 and reed switch 310 to an outside of speed sensor 200. Speed sensor 200 moves rotationally with respect to base member 100 to vary a distance between rear wheel 3 and reed switch 211, and cadence sensor 300 moves rotationally with respect to speed sensor 200 to vary a distance between gear crank 4 and reed switch 310.

It is to be noted that the bicycle to which the sensor device in accordance with the present embodiment is attached is not limited to bicycle 1 shown in Fig. 1, and may be, for example, a three-wheeled cycle.

Although the present invention has been described and illustrated in detail, it is clearly understood that the same is by way of illustration and example only and is not to be taken by way of limitation, the scope of the present invention being interpreted by the terms of the appended claims.

## Claims

1. A sensor device to be attached to a frame (5) constituting a bicycle (1), comprising:
a base member (100) to be tied up on said frame (5);
a body member (200) rotatably attached to said base member (100) and having a first sensor portion (211) for detecting movement of a first part (3, 4) in said bicycle (1);
a rotationally moving member (300) rotatably attached to said body member (200) and having a second sensor portion (310) for detecting movement of a second part (4, 3) in said bicycle (1), and
a transmitting portion (212) electrically connected to said first and second sensor portions (211, 310) for transmitting signals detected by said first and second sensor portions (211, 310) to an outside of said body member (200),
said body member (200) is movable rotationally with respect to said base member (100) to vary a distance between said first part (3, 4) and said first sensor portion (211), and
said rotationally moving member (300) is movable rotationally with respect to said body member (200) to vary a distance between said second part (4, 3) and said second sensor portion (310),
**characterized in that**
said body member (200) includes said transmitting portion (212).

2. The sensor device according to claim 1, wherein said rotationally moving member (300) is detachable from said body member (200).

3. The sensor device according to claim 1 or 2, wherein
said first sensor portion (211) is able to detect a running speed of a said bicycle (1) by sensing the movement of the first part (3) involving the wheel (3) of said bicycle based on a number of rotations of said wheel (3).

4. The sensor device according to one of claims 1 to 3, wherein
said second sensor portion (310) is able to detect a cadence at which a pedal is moving based on a number of rotations of said gear crank (4) as second part (4).

5. The sensor device according to one of claims 1 to 4, wherein
said first sensor portion (211) is able to detect a cadence at which a pedal is moving based on a number of rotations of said gear crank (4) as first part (4).

6. The sensor device according to one of claims 1 to 5, wherein
said second sensor portion (310) is able to detect a running speed of said bicycle (1) based on a number of rotations of said wheel (3) as second part (3).

7. The sensor device according to one of claims 1 to 6, wherein said frame (5) is a chain stay (5) of said bicycle (1).

## Patentansprüche

1. Sensorvorrichtung, die an einen Rahmen (5) anzubringen ist, der ein Fahrrad (1) bildet, mit:
einem Basiselement (100), das an dem Rahmen (5) festzuziehen ist;
einem Körperelement (200), das drehbar an dem Basiselement (100) angebracht ist und einen ersten Sensorabschnitt (211) zum Erfassen einer Bewegung eines ersten Teils (3, 4) bei dem Fahrrad (1) hat;
einem sich drehend bewegenden Element (300), das drehend an dem Körperelement (200) angebracht ist und einen zweiten Sensorabschnitt (310) zum Erfassen einer Bewegung eines zweiten Teils (4, 3) bei dem Fahrrad (1) hat, und
einem Übertragungsabschnitt (212), der mit dem ersten und dem zweiten Sensorabschnitt (211, 310) elektrisch verbunden ist, um Signale, die durch den ersten und den zweiten Sensorabschnitt (211, 310) erfasst werden, zur Außenseite des Körperelements (200) zu übertragen,
wobei das Körperelement (200) hinsichtlich des Basiselementes (100) drehend bewegbar ist, und einen Abstand zwischen dem ersten Teil (3, 4) und dem ersten Sensorabschnitt (211) zu verändern, und
wobei das sich drehend bewegende Element (300) hinsichtlich des Körperelements (200) drehend bewegbar ist, um einen Abstand zwischen dem zweiten Teil (4, 3) und dem zweiten Sensorabschnitt (310) zu verändern,
**dadurch gekennzeichnet, dass** das Körperelement (200) den Übertragungsabschnitt (212) aufweist.

2. Sensorvorrichtung gemäß Anspruch 1, wobei das sich drehend bewegende Element (300) von dem Körperelement (200) abnehmbar ist.

3. Sensorvorrichtung gemäß Anspruch 1 oder 2, wobei
der erste Sensorabschnitt (211) eine Fahrtgeschwindigkeit des Fahrrads (1) durch Abtasten der Bewegung des ersten Teils (3), das mit dem Rad (3) des Fahrrads verknüpft ist, auf der Grundlage einer Drehzahl des Rads (3) erfassen kann.

4. Sensorvorrichtung gemäß einem der Ansprüche 1 bis 3, wobei
der zweite Sensorabschnitt (310) eine Trittfrequenz erfassen kann, mit der ein Pedal bewegt wird, und zwar auf der Grundlage einer Drehzahl der Kurbel (4) als zweites Teil (4).

5. Sensorvorrichtung gemäß einem der Ansprüche 1 bis 4, wobei
der erste Sensorabschnitt (211) eine Trittfrequenz erfassen kann, mit der ein Pedal bewegt wird, und zwar auf der Grundlage einer Drehzahl der Kurbel (4) als erstes Teil (4).

6. Sensorvorrichtung gemäß einem der Ansprüche 1 bis 5, wobei
der zweite Sensorabschnitt (310) eine Fahrtgeschwindigkeit des Fahrrads (1) auf der Grundlage einer Drehzahl des Rads (3) als zweites Teil (3) erfassen kann.

7. Sensorvorrichtung gemäß einem der Ansprüche 1 bis 6, wobei der Rahmen (5) eine Kettenstrebe (5) des Fahrrads (1) ist.

## Revendications

1. Capteur destiné à être fixé sur un cadre (5) constitutif d'une bicyclette (1), comprenant :
un élément de base (100) destiné à être assujetti sur ledit cadre (5) ;
un élément de corps (200) fixé de manière rotative audit élément de base (100), et ayant une première partie de capteur (211) pour détecter un déplacement d'une première partie (3, 4) dans ladite bicyclette (1) ;
un bras se déplaçant en rotation (300) fixé de manière rotative audit élément de corps (200), et ayant une deuxième partie de capteur (310) pour détecter un déplacement d'une deuxième partie (4, 3) dans ladite bicyclette (1), et
une partie de transmission (212) reliée électriquement auxdites première et deuxième parties de capteur (211, 310) pour transmettre des signaux détectés par lesdites première et deuxième parties de capteur (211, 310) à l'extérieur dudit élément de corps (200),
ledit élément de corps (200) étant mobile en rotation par rapport audit élément de base (100) pour modifier une distance entre ladite première partie (3, 4) et ladite première partie de capteur (211), et
ledit bras se déplaçant en rotation (300) étant mobile en rotation par rapport audit élément de corps (200) pour modifier une distance entre ladite deuxième partie (4, 3) et ladite deuxième parties de capteur (310),
**caractérisé en ce que**
ledit élément de corps (200) comprend ladite partie de transmission (212).

2. Capteur selon la revendication 1, dans lequel ledit bras se déplaçant en rotation (300) peut être détaché dudit élément de corps (200).

3. Capteur selon la revendication 1 ou 2, dans lequel
ladite première partie de capteur (211) est capable de détecter une vitesse de déplacement de ladite bicyclette (1) par détection du déplacement de la première partie (3) impliquant la roue (3) de ladite bicyclette sur la base d'un nombre de rotations de ladite roue (3).

4. Capteur selon l'une quelconque des revendications 1 à 3, dans lequel
ladite deuxième partie de capteur (310) est capable de détecter une cadence à laquelle une pédale est déplacée sur la base d'un nombre de rotations de ladite manivelle d'engrenage (4) en tant que deuxième partie (4).

5. Capteur selon l'une quelconque des revendications 1 à 4, dans lequel
ladite première partie de capteur (211) est capable de détecter une cadence à laquelle une pédale est déplacée sur la base d'un nombre de rotations de ladite manivelle d'engrenage (4) en tant que première partie (4).

6. Capteur selon l'une quelconque des revendications 1 à 5, dans lequel
ladite deuxième partie de capteur (310) est capable de détecter une vitesse de déplacement de ladite bicyclette (1) sur la base d'un nombre de rotations de ladite manivelle d'engrenage (4) en tant que deuxième partie (3).

7. Capteur selon l'une quelconque des revendications 1 à 6, dans lequel ledit cadre (5) est un support de chaîne (5) de ladite bicyclette (1).
